# FASCICULE DE BREVET EUROPEEN

(11) **EP 3 913 180 B1**
(45) Date de publication et mention de la délivrance du brevet: **09.10.2024**
(21) Numéro de dépôt: 21174396.8
(22) Date de dépôt: 18.05.2021
(51) Int. Cl.: E05F 15/46, B29C 65/64, B29C 70/88, B60J 5/10, B29C 70/82, B60R 16/02

(54) **PIÈCE DE CARROSSERIE AVEC SYSTÈME ANTI-PINCEMENT INTÉGRÉ**
KAROSSERIETEIL MIT INTEGRIERTEM EINKLEMMSCHUTZSYSTEM
BODYWORK PART WITH INTEGRATED ANTI-PINCHING SYSTEM

(30) Priorité: 20.05.2020 FR 2005275
(43) Date de publication de la demande: 24.11.2021
(73) Titulaire: OPmobility SE, 69007 Lyon (FR)
(72) Inventeur: ARTHAUD-BERTHET, Sébastien, 01150 SAINTE-JULIE (FR); TRESSE, David, 01150 SAINTE-JULIE (FR); MIQUEL, Patrice, 01150 SAINTE-JULIE (FR)
(74) Mandataire: LLR

(56) Documents cités:
- WO-A1-2014/019702
- DE-B3- 102012 217 086
- US-A1- 2014 268 604

## Description

L'invention concerne le domaine de l'industrie automobile et plus spécifiquement les pièces de carrosserie en matière plastique destinées à être monté sur un véhicule automobile.

Une telle pièce de carrosserie est par exemple connue du document DE 10 2012 217086 B3.

De nombreux véhicules modernes sont équipés de pièces de de carrosserie en matière plastique, par exemple des ouvrants tels que des hayons arrières ou des portières, équipées de moteur destiné à réaliser les fonctions d'ouverture et de fermeture. De tels ouvrants peuvent être équipés de dispositifs anti-pincement comportant des capteurs capacitifs positionnés en périphérie de l'ouvrant, au niveau des bords latéraux.

Un capteur capacitif permet de détecter à faible distance une variation de capacité électrique due à la présence d'un objet ou la présence d'un objet dans le champ de détection du capteur.

De façon générale, de tels capteurs détectent donc, sans nécessité de contact, la présence d'un objet entrant dans le champ de détection, par détection d'une variation de capacité électrique. Le dispositif stoppe alors la fermeture du hayon avant que l'obstacle soit pincé entre l'ouvrant et la caisse du véhicule.

De tels capteurs peuvent être utilisés pour détecter la présence d'obstacles dans de nombreux types de fermetures automobiles telles que les lève-vitres électriques, les toits ouvrants, les portes latérales, les portes coulissantes, les hayons.

De tels capteurs capacitifs présentent l'avantage de pouvoir détecter à courte distance la présence de tous types d'objets ou matériaux, car sensibles aux métaux et aux non-métaux.

Un capteur capacitif est basé sur le principe du condensateur, dont la capacité dépend notamment de la nature du milieu diélectrique séparant ses électrodes et de la distance les séparant. De façon générale, ce milieu diélectrique est de l'air. Ainsi tout objet ayant une constante diélectrique ou permittivité relative différente (celle de l'air est de 1) amené à proximité de l'électrode provoque une variation détectable (par exemple, la permittivité du corps humain, est très proche de celle de l'eau qui est de 81). Une détection de cette variation permet de détecter la présence de l'objet.

Une des électrodes du condensateur formant le capteur peut être constituée de fils ou films conducteurs, en particulier métalliques.

Les capteurs capacitifs actuellement utilisés dans l'industrie automobile sont généralement des systèmes positionnés sur les ouvrants, au sein des différentes zones sensibles.

On appelle « zone sensible » la zone dans laquelle il existe un risque de pincement. Il s'agit notamment, pour un ouvrant arrière, de la zone située entre la périphérie de l'ouvrant et la caisse.

Il existe donc un réel besoin de positionner ces capteurs capacitifs au plus proche de la zone sensible de sorte à pouvoir y assurer la meilleure détection possible.

Cependant, comme mentionné précédemment, les capteurs capacitifs sont des systèmes qui doivent généralement être positionnés sur l'ouvrant et sont basés sur des fils conducteurs fixés à un support, ce dernier étant par exemple une gaine souple formant un faisceau ou un boitier plastique.

Par conséquent, ces systèmes sont encombrants ou rigides et ils sont donc difficiles à intégrer au sein de l'environnement de l'ouvrant, ce qui complexifie, voire même empêche, un positionnement optimal au plus proche d'une zone sensible pour permettre une détection optimale.

En outre, la fixation de ces systèmes capacitifs rapportés nécessite l'ajout d'éléments de fixation qui, en fonction de leur nature, augmentent l'encombrement total du système capacitif et/ou peuvent complexifier l'étape d'assemblage entre ce dernier et la pièce de carrosserie concernée.

Enfin, ces systèmes sont généralement logés dans une zone visible de l'ouvrant, c'est-à-dire une zone que voit l'utilisateur, lorsque l'ouvrant est en position ouverte. Un tel positionnement, en plus d'être inesthétique, présente des risques puisque le dispositif peut être heurté ou accroché maladroitement par l'utilisateur.

De plus, dans le cas d'un support sous la forme d'une gaine formant un faisceau, celui-ci est généralement fixé à l'ouvrant via différents points distants les uns des autres. Chaque point représente dès lors un point à risque puisqu'ils peuvent chacun se détacher sous l'effet des claquements ou des vibrations du véhicules, créant ainsi des bruits parasites désagréables pour l'utilisateur.

L'invention a notamment pour but de remédier à tous les désavantages précédemment listés.

A cet effet l'invention a pour objet une pièce de carrosserie pour véhicule automobile comprenant un corps principal en matière plastique et un système anti-pincement, le système anti-pincement comprenant un capteur capacitif comprenant au moins un premier fil conducteur intégré dans l'épaisseur du corps principal par soudage de telle sorte à être affleurant ou désaffleurant du corps principal, le premier fil conducteur étant situé au moins partiellement dans une zone périphérique dudit corps principal, ledit capteur capacitif étant apte à détecter la présence d'un objet ou d'une main d'un utilisateur dans ladite zone périphérique.

Ainsi, la pièce de carrosserie selon l'invention offre une détection au plus proche de la zone périphérique du corps principal et au plus proche d'une zone sensible ciblée. Elle permet donc une détection optimisée par le capteur capacitif du système anti-pincement, et ce, puisque le fil conducteur dudit capteur est intégré au plus au plus près du bord du corps principal de la pièce. En outre, la pièce de carrosserie selon l'invention présente l'avantage de comprendre un système anti-pincement tout en maintenant un faible encombrement en épaisseur de son corps principal. A ce titre, par fil conducteur « affleurant ou désaffleurant au corps principal », on entend que le fil conducteur forme, respectivement, une surface en continuité de forme ou un relief avec la surface voisine du corps principal.

Avantageusement, le capteur capacitif comprend un deuxième fil conducteur intégré dans l'épaisseur du corps principal par soudage de telle sorte à être affleurant ou désaffleurant du corps principal, le deuxième fil conducteur étant situé au moins partiellement dans une zone périphérique dudit corps principal.

Dès lors la détection d'un objet dans la zone sensible par le capteur capacitif est optimisée compte tenu de la différence de capacité entre les deux fils conducteurs que génère la présence de cet objet. Plus précisément, l'un des deux fils conducteurs est qualifié de « fil émetteur » tandis que l'autre est qualifié de « fil récepteur ».

Avantageusement, la zone périphérique est une zone s'étendant depuis le bord du corps principal jusqu' à 20 mm dudit bord. Il est ainsi possible de détecter la présence d'un objet au plus proche de la zone sensible. Avantageusement, la zone périphérique s'étend depuis le bord du corps principal jusqu'à 10 mm dudit bord. Encore plus avantageusement, la zone périphérique s'étend depuis le bord du corps principal jusqu'à 5 mm dudit bord.

Avantageusement, la soudure des fils conducteurs est réalisée par application de vibrations ultrasoniques.

Ainsi, il est possible de créer un sillon dans le corps principal et d'y encastrer les fils conducteurs de façon presque simultanée, ce qui rend la soudure à la fois rapide et fiable. Une telle soudure peut être réalisée à l'aide d'une sonotrode via les étapes suivante :
- insertion d'une portion du fil conducteur dans une cavité d'une extrémité libre d'une sonotrode,
- application des vibrations ultrasoniques à la sonotrode et insertion du fil de sorte à créer le sillon dans l'épaisseur en plastique du corps principal et y encastrer le fil.

Avantageusement, la pièce comprend un élément rapporté sur le corps principal par un cordon de colle, le cordon de colle recouvrant au moins l'un des fils conducteurs.

Ainsi, le fil conducteur (ou les fils conducteurs) recouvert par le cordon de colle est protégé ce qui assure la pérennité du capteur capacitif et offre donc une sécurité dans la détection d'objet dans la zone sensible considérée.

Avantageusement, le corps principal et l'élément rapporté forment un volume étanche dans lequel est situé le premier fil conducteur et/ou le deuxième fil conducteur.

L'invention a également pour objet un véhicule automobile comprenant au moins une pièce de carrosserie selon l'une quelconque des variantes de la pièce de carrosserie de l'invention.

Avantageusement, la pièce de carrosserie est un ouvrant tel qu'un hayon arrière, une porte latérale, un capot ou un toit ouvrant.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un hayon de véhicule automobile selon un mode de réalisation de l'invention,
[Fig. 2] la figure 2 est un ensemble de vues en coupe (figure 2A, 2B et 2C) du hayon de la figure 1 selon la coupe II-II,
[Fig. 3] la figure 3 est un ensemble de vues en coupe (figure 3A et 3B) du hayon de la figure 1 selon la coupe III-III.

### Description détaillée

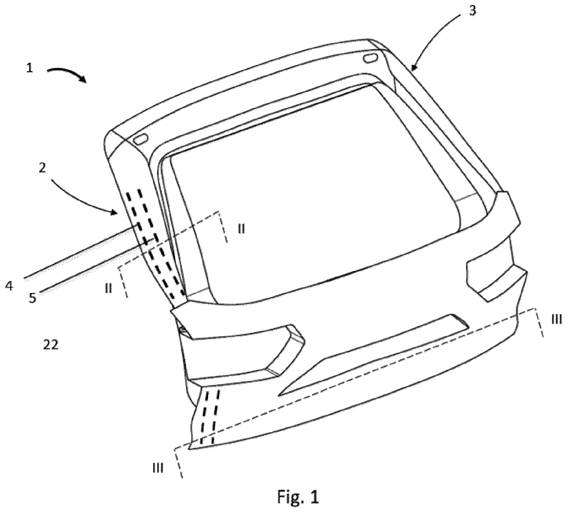

On a représenté sur les figures 1 à 3B une pièce de carrosserie (sous la forme d'un hayon) selon différentes variantes de réalisation de l'invention, cette pièce étant désignée par la référence générale 1.

La pièce de carrosserie 1 selon l'invention comprend un corps principal 2 en matière plastique et système anti-pincement, le système anti-pincement comprenant un capteur capacitif comprenant au moins un premier fil conducteur 4 intégré dans l'épaisseur du corps principal 2 par soudage de telle sorte à être affleurant ou désaffleurant du corps principal 2, le premier fil conducteur 4 étant situé au moins partiellement dans une zone périphérique dudit corps principal, ledit capteur capacitif étant apte à détecter la présence d'un objet ou d'une main d'un utilisateur (non représentés) dans ladite zone périphérique.

La pièce 1 telle que représentée aux figures 1 à 3B comprend un élément rapporté 3, en l'occurrence une peau extérieure 3 rapportée, sur le corps principal 2. Le capteur capacitif du système anti-pincement de la pièce de l'invention décrite dans ces figures comprend un deuxième fil conducteur 5, lui aussi intégré dans l'épaisseur du corps principal 2 par soudage de telle sorte à être affleurant ou désaffleurant du corps principal 2. Ce deuxième fil conducteur 5 est également situé au moins partiellement dans une zone périphérique dudit corps principal 2.

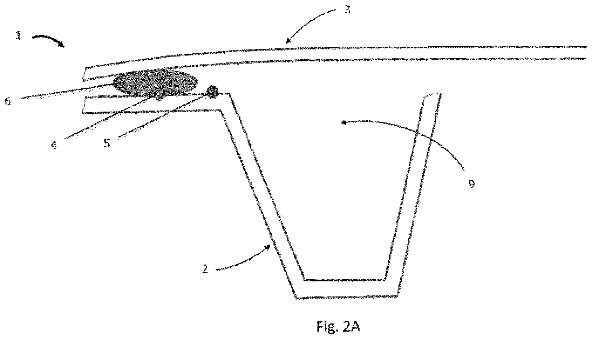

Comme représenté aux figures 2A à 3B le premier fil conducteur 4 et le second fil conducteur 5 sont soudés au corps principal 2 par application de vibrations ultrasoniques de manière à être désaffleurants et forme un relief avec la surface voisine du corps principal 2. Ces deux fils conducteurs 4 et 5 sont des éléments du capteur capacitif qui comprend en outre un système électronique (non représentée) capable de traiter les données reçues lors de la détection d'un objet ou d'une main d'un utilisateur. Le capteur capacitif est quant à lui un sous-ensemble du système anti-pincement qui comprend un système de commande capable de commander l'actionneur responsable de la fermeture et de l'ouverture du hayon 1, de sorte à stopper la fermeture ou l'ouverture de ce dernier en cas de risque de pincement.

Les fils conducteurs 4 et 5 peuvent être soudés de manière à être affleurants et ainsi former une surface plane avec la surface voisine du corps principal 2, ce qui réduit encore l'encombrement localisé à cette portion spécifique du corps principal 2 et les protège d'autant plus de toute agression puisqu'ils sont alors enchâssés en totalité dans la matière plastique.

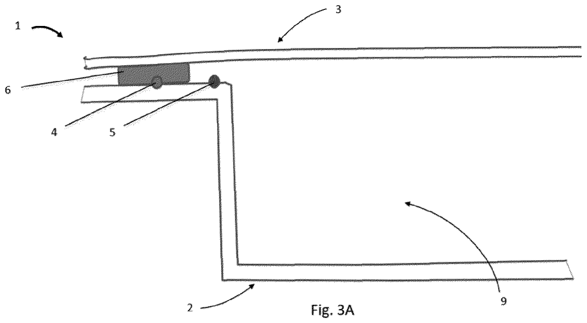

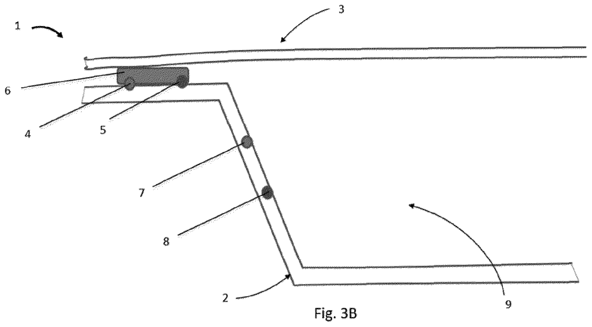

Les fils conducteurs 4 et 5 sont situés au sein de la zone périphérique du corps principal 2 ce qui permet d'optimiser la détection d'un éventuel pincement dans cette zone sensible du véhicule, une fois le hayon 1 assemblé. Le corps principal 2, représenté aux figures 2A à 2C, correspond à un montant latéral du hayon 1 tandis qu'il correspond à une partie basse du hayon 1 au figure 3A et 3B.

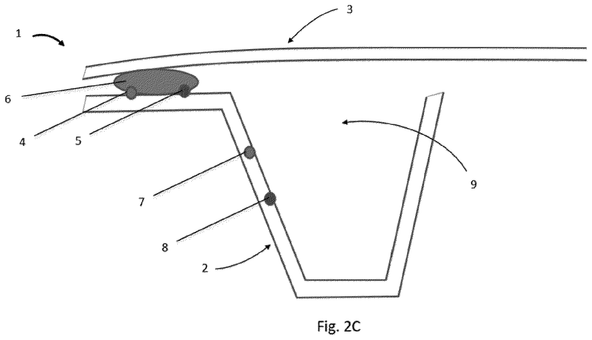

Néanmoins, le véhicule peut comporter d'autres zones sensibles relatives à l'ouverture et la fermeture du hayon 1 qui peut donc comprendre au moins un autre capteur capacitif, comme représenté aux figures 2C et 3B. Ce second capteur capacitif, similaire dans sa conception à celui précédemment décrit, est également un sous-ensemble du système anti-pincement et comprend un premier fil conducteur 7 et un deuxième fil conducteur 8 soudés de manière affleurante à la surface voisine du corps principal 2, au plus proche d'une autre zone sensible. Ainsi, le système anti-pincement dispose de plusieurs capteurs capacitifs, ce qui lui permet d'assurer une meilleure détection des situations à risque et d'affiner les instructions qu'il transmet à l'actionneur du hayon 1.

Comme mentionné précédemment, le hayon 1 comprend une peau extérieure 3. Cette dernière est rapportée sur le corps principal 2 et est fixée par un cordon de colle 6 situé dans la zone périphérique du corps principal 2.

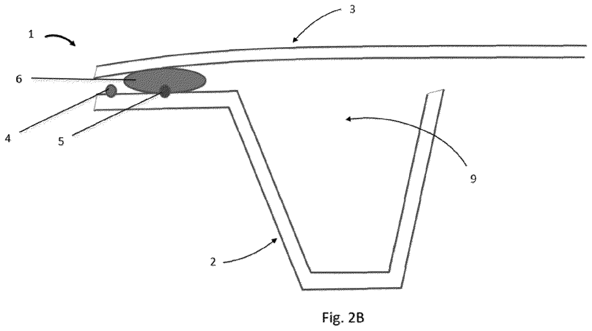

Comme représenté aux figures 2A, 2B et 3A, l'un des deux fils conducteurs 4 ou 5 est recouvert par le cordon de colle 6 ce qui le protège intégralement et assure la pérennité dudit fil, et donc *in fine* du capteur capacitif, au fil du temps. Dans une variante de l'invention représentée aux figure 2C et 3B, les deux fils conducteurs 4 et 5 sont recouverts par le cordon de colle 6 et sont donc tous les deux protégés par ce dernier. Le corps principal 2 et la peau extérieure 3 forment un volume étanche 9 au sein duquel il est possible de souder les fils conducteurs 4 et 5, ce volume étanche 9 étant non accessible à l'utilisateur et au plus proche de la bordure. Une meilleure détection est dès lors possible au sein de la zone sensible correspondante, et ce, puisque les fils conducteurs 4 et 5 ont beaucoup moins de chance d'être abimés en cours d'utilisation du véhicule (non représenté) sur lequel le hayon 1 est assemblé. Cette configuration entre les fils conducteurs 4 et 5 et le cordon de colle 6 assure également moins de dommages pour les fils conducteurs 4 et 5 causés par un écoulement d'eau non désiré, qui risquerait de perturber le fonctionnement du capteur.

L'invention n'est pas limitée aux modes de réalisation présentés et d'autres modes de réalisation apparaîtront clairement à l'homme du métier. Par exemple, le fil ou l'un des fils conducteurs peut être intégré sur la face interne, en regard du corps principal, de la peau extérieure. Lorsque l'un des fils conducteurs n'est pas intégré au sein du volume étanche il peut de préférence être intégré de manière affleurante dans l'épaisseur du corps principal et peut ainsi être mieux protégé. Lorsque le capteur est pourvu de deux fils conducteurs, ces derniers peuvent être intégrés de manière simultanée dans l'épaisseur du corps principal, ce qui permet entre autres choses de pouvoir les intégrer parallèlement au sein de l'épaisseur de la pièce, l'un par rapport à l'autre. Ils peuvent également être intégrés par le même appareil que l'appareil réalisant la pose du cordon de colle (pour ce faire, l'appareil peut avoir une tête pourvue d'une buse de pose du cordon de colle et d'une sonotrode pour l'intégration desdits fils).

### Liste de références

1 : pièce de carrosserie - hayon
2 : corps principal
3 : peau extérieure
4 : premier fil conducteur du capteur capacitif
5 : deuxième fil conducteur du capteur capacitif
6 : cordon de colle
7 : premier fil conducteur d'un second capteur capacitif
8 : deuxième fil conducteur du second capteur capacitif
9 : volume étanche

## Revendications

1. Pièce de carrosserie (1) pour véhicule automobile comprenant un corps principal (2) en matière plastique et un système anti-pincement, le système anti-pincement comprenant un capteur capacitif comprenant au moins un premier fil conducteur (4) intégré dans l'épaisseur du corps principal par soudage de telle sorte à être affleurant ou désaffleurant du corps principal (2), le premier fil conducteur (4) étant situé au moins partiellement dans une zone périphérique dudit corps principal (2), ledit capteur capacitif étant apte à détecter la présence d'un objet ou d'une main d'un utilisateur dans ladite zone périphérique.

2. Pièce (1) selon la revendication précédente, dans laquelle le capteur capacitif comprend un deuxième fil conducteur (5) intégré dans l'épaisseur du corps principal (2) par soudage de telle sorte à être affleurant ou désaffleurant du corps principal (2), le deuxième fil conducteur (5) étant situé au moins partiellement dans une zone périphérique dudit corps principal (2).

3. Pièce (1) selon l'une quelconque des revendications précédentes, dans laquelle la zone périphérique est une zone s'étendant depuis le bord du corps principal (2) jusqu'à 20 mm dudit bord.

4. Pièce (1) selon l'une quelconque des revendications précédentes, dans laquelle la soudure des fils conducteurs (4, 5) est réalisée par application de vibrations ultrasoniques.

5. Pièce (1) selon l'une quelconque des revendications précédentes, comprenant un élément rapporté (3) sur le corps principal (2) par un cordon de colle (6), le cordon de colle (6) recouvrant au moins l'un des fils conducteurs (4, 5).

6. Pièce (1) selon la revendication précédente, dans laquelle le corps principal (2) et l'élément rapporté (3) forment un volume étanche (9) dans lequel est situé le premier fil conducteur (4) et/ou le deuxième fil conducteur (5).

7. Véhicule automobile comprenant au moins une pièce de carrosserie (1) selon l'une quelconque des revendications précédentes.

8. Véhicule selon la revendication précédente, dans lequel la pièce (1) étant un ouvrant tel qu'un hayon arrière (1) , une porte latérale, un capot ou un toit ouvrant.

## Patentansprüche

1. Karosserieteil (1) für ein Kraftfahrzeug aufweisend einen Hauptkörper (2) aus Kunststoff und ein Einklemmschutzsystem, wobei das Einklemmschutzsystem einen kapazitiven Sensor mit mindestens einem ersten leitenden Draht (4) aufweist, der durch Schweißen so in die Dicke des Hauptkörpers integriert ist, dass er mit dem Hauptkörper (2) bündig oder bündig abschließt, wobei der erste leitende Draht (4) zumindest teilweise in einem Umfangsbereich des Hauptkörpers (2) angeordnet ist, wobei der kapazitive Sensor eingerichtet ist, die Anwesenheit eines Objekts oder einer Hand eines Benutzers in dem Umfangsbereich zu erfassen.

2. Teil (1) nach dem vorhergehenden Anspruch, wobei der kapazitive Sensor einen zweiten leitenden Draht (5) aufweist, der durch Schweißen in die Dicke des Hauptkörpers (2) integriert ist, so dass er bündig oder nicht bündig mit dem Hauptkörper (2) ist, wobei sich der zweite leitende Draht (5) zumindest teilweise in einem Umfangsbereich des Hauptkörpers (2) befindet.

3. Teil (1) nach einem der vorhergehenden Ansprüche, wobei der Umfangsbereich ein Bereich ist, der sich von der Kante des Hauptkörpers (2) bis zu 20 mm von dieser Kante erstreckt.

4. Teil (1) nach einem der vorhergehenden Ansprüche, bei dem das Verschweißen der leitenden Drähte (4, 5) durch Anwendung von Ultraschallschwingungen erfolgt.

5. Teil (1) nach einem der vorhergehenden Ansprüche, aufweisend ein Anbauelement (3), das mittels einer Klebstoffraupe (6) auf dem Hauptkörper (2) angebracht ist, wobei die Klebstoffraupe (6) mindestens einen der leitenden Drähte (4, 5) bedeckt.

6. Teil (1) nach dem vorhergehenden Anspruch, wobei der Hauptkörper (2) und das Anbauelement (3) ein abgedichtetes Volumen (9) bilden, in dem sich der erste leitender Draht (4) und/oder der zweite leitender Draht (5) befindet.

7. Fahrzeug aufweisend mindestens einem Karosserieteil (1) nach einem der vorhergehenden Ansprüche.

8. Fahrzeug nach dem vorhergehenden Anspruch, wobei es sich bei dem Teil (1) um einen Flügel handelt, wie z. B. eine Heckklappe (1), eine Seitentür, eine Motorhaube oder ein Schiebedach.

## Claims

1. A bodywork part (1) for a motor vehicle comprising a main body (2) made from a plastic material and an anti-pinching system, the anti-pinching system comprising a capacitive sensor comprising at least a first conductive wire (4) integrated into the thickness of the main body by welding so as to be flush with or not flush with the main body (2), the first conductive wire (4) being located at least partially in a peripheral zone of said main body (2), said capacitive sensor being able to detect the presence of an object or a hand of a user in said peripheral zone.

2. The bodywork part (1) according to the preceding claim, wherein the capacitive sensor comprises a second conductive wire (5) integrated into the thickness of the main body (2) by welding so as to be flush with or not flush with the main body (2), the second conductive wire (5) being located at least partially in a peripheral zone of said main body (2).

3. The bodywork part (1) according to any one of the preceding claims, wherein the peripheral zone is a zone extending from the edge of the main body (2) to 20 mm from said edge.

4. The bodywork part (1) according to any one of the preceding claims, wherein the welding of the conductive wires (4, 5) is carried out by applying ultrasonic vibrations.

5. The bodywork part (1) according to any one of the preceding claims, comprising an attached element (3) attached to the main body (2) by a bead of adhesive (6), the bead of adhesive (6) covering at least one of the conductive wires (4, 5).

6. The bodywork part (1) according to the preceding claim, wherein the main body (2) and the attached element (3) form a sealed volume (9) in which the first conductive wire (4) and/or the second conductive wire (5) is located.

7. A motor vehicle comprising at least one bodywork part (1) according
to any one of the preceding claims.

8. The motor vehicle according to the preceding claim, wherein the
bodywork part (1) is an opening element such as a tailgate (1), a side door, a hood or a sunroof.
